# EUROPÄISCHE PATENTANMELDUNG

(11) **EP 2 055 912 A2**
(43) Veröffentlichungstag der Anmeldung: **06.05.2009**
(21) Anmeldenummer: 08015753.0
(22) Anmeldetag: 06.09.2008
(51) Int. Cl.: F02B 41/10

(54) **Antriebsstrang, insbesondere Fahrzeugantriebsstrang**

(30) Priorität: 30.10.2007 DE 102007052169
(71) Anmelder: Voith Patent GmbH, 89522 Heidenheim (DE)
(72) Erfinder: Bartosch, Stephan, 89192 Rammingen (DE); Berger, Jürgen, 89547 Gerstetten (DE)
(74) Vertreter: Dr. Weitzel & Partner

(57) **Zusammenfassung**

Die Erfindung betrifft einen Antriebsstrang, insbesondere Fahrzeugantriebsstrang,
- mit einem Verbrennungsmotor (1) zum Einspeisen von Antriebsleistung in den Antriebsstrang, wobei der Verbrennungsmotor (1) einen Abgasstrom (2) erzeugt;
- mit einer Abgasnutzturbine (3), die im Abgasstrom (2) vom Abgas beaufschlagt angeordnet ist, um Abgasenergie in Antriebsleistung umzuwandeln;
- mit einem Dampfkreislauf (4), umfassend einen Dampferzeuger und eine dampfgetriebene Expansionsmaschine (6), mittels welcher Antriebsleistung in den Antriebsstrang einspeisbar ist;
- die dampfgetriebene Expansionsmaschine (6) steht in einer Triebverbindung mit der Abgasnutzturbine (3), über welche die Abgasnutzturbine (3) und/oder ein von der Abgasnutzturbine angetriebenes Aggregat mittels der dampfgetriebenen Expansionsmaschine (6) antreibbar ist.

## Beschreibung

Die Erfindung betrifft einen Antriebsstrang, insbesondere Fahrzeugantriebsstrang mit einem Verbrennungsmotor, beispielsweise einem Dieselmotor oder sonstigen Kolbenmotor, in dessen Abgasstrom eine Abgasnutzturbine angeordnet ist, und wobei ferner ein Dampfkreislauf vorgesehen ist, um mit im Antriebsstrang anfallender Wärme ein Arbeitsmedium des Dampfkreislaufes, insbesondere Wasser oder ein Wassergemisch, zu verdampfen und anschließend in einer dampfgetriebenen Expansionsmaschine zu expandieren. Die Antriebsleistung der Expansionsmaschine wird wiederum in den Antriebsstrang gespeist, entweder um - bei einem Fahrzeug - das Fahrzeug anzutreiben oder ein Nebenaggregat anzutreiben.

Fahrzeugantriebsstränge, die neben einer Abgasnutzturbine einen Dampfkreislauf umfassen, sind bekannt. Beispielsweise wird auf die Patentschrift DD 96 753 verwiesen, bei welcher mittels einer Abgasturbine ein erster Verdichter und mittels einer Dampfturbine ein dem ersten Verdichter nachgeschalteter zweiter Verdichter angetrieben werden, wobei beide Verdichter zum Aufladen eines Verbrennungsmotors dienen.

Obwohl bei den bekannten Ausführungsformen bereits eine bessere Kraftstoffausnutzung als bei Antriebssträngen ohne Dampfkreislauf möglich ist, besteht aufgrund steigender Anforderungen unter Umweltgesichtspunkten ein Bedarf für weitere Verbesserungen.

Der vorliegenden Erfindung liegt die Aufgabe zugrunde, einen Antriebsstrang, insbesondere Fahrzeugantriebsstrang, anzugeben, bei welchem der Kraftstoffverbrauch des Verbrennungsmotors durch optimale Ausnutzung der vorhandenen Systemwärme zur Antriebsleistungserzeugung noch weiter als bisher verringert wird.

Die erfindungsgemäße Aufgabe wird durch einen Antriebsstrang mit den Merkmalen von Anspruch 1 gelöst. In den abhängigen Ansprüchen sind vorteilhafte und besonders zweckmäßige Ausgestaltungen der Erfindung angegeben.

Der erfindungsgemäße Antriebsstrang, insbesondere Fahrzeugantriebsstrang, wie zum Beispiel in einem Nutzkraftfahrzeug wie Lkw, Bus, Baumaschine, Triebwagen eines Schienenfahrzeugs oder in einer Lokomotive, umfasst einen Verbrennungsmotor, beispielsweise Dieselmotor oder sonstiger Kolbenmotor, und eine Abgasnutzturbine, die im Abgasstrom des Verbrennungsmotors angeordnet ist. Die Abgasnutzturbine kann beispielsweise einen Verdichter zum Verdichten von dem Verbrennungsmotor zugeführter Frischluft antreiben, um den Verbrennungsmotor aufzuladen. Alternativ oder zusätzlich kann die Abgasnutzturbine ihre Antriebsleistung als mechanische Antriebsenergie in den Antriebsstrang einspeisen, insbesondere zum Antreiben des Fahrzeugs. Beispielsweise steht die Abgasnutzturbine dann in einer Triebverbindung mit der Kurbelwelle oder sonstigen Abtriebswelle des Verbrennungsmotors oder ist in eine solche Triebverbindung schaltbar.

Wenn nun Betriebszustände auftreten, in welchen der Verbrennungsmotor nur einen geringen Abgasstrom erzeugt, so kann die Abgasnutzturbine nur eine entsprechend geringe Abgasenergie in Antriebsenergie umwandeln. Hierdurch steht entsprechend wenig Antriebsleistung zum Verdichten der Frischluft zur Aufladung des Verbrennungsmotors zur Verfügung (im sogenannten Turboloch) oder, bei einer Einspeisung der Antriebsenergie der Abgasnutzturbine in den Fahrzeugantriebsstrang, insbesondere auf die Kurbelwelle, ist diese Antriebsleistung gering. Erfindungsgemäß ist daher in dem Antriebsstrang eine dampfgetriebene Expansionsmaschine vorgesehen, welche in einer Triebverbindung mit der Abgasnutzturbine steht oder in eine solche Triebverbindung schaltbar ist. Gemäß einer ersten Ausführungsform steht die dampfgetriebene Expansionsmaschine in einer ständigen Triebverbindung mit der Abgasnutzturbine. Gemäß einer alternativen Ausführungsform ist diese Triebverbindung wahlweise herstellbar.

Gemäß einer erfindungsgemäßen Ausführungsform kann auch anstelle des unmittelbaren Antriebs der Abgasnutzturbine mittels der dampfgetriebenen Expansionsmaschine das bei ausreichender Abgasmenge von der Abgasturbine angetriebene Aggregat angetrieben werden, ohne dass die Abgasnutzturbine mitgeschleppt wird. Beispielsweise kann ein entsprechender Freilauf oder Wellenschalter in der Triebverbindung zwischen dampfgetriebener Expansionsmaschine und Abgasnutzturbine mit Durchtrieb zum Aggregat vorgesehen sein. Unter Aggregat ist auch eine Antriebswelle, beispielsweise die Kurbelwelle, oder andere Einrichtung zur Einspeisung von Antriebsleistung in den Antriebsstrang gemeint.

Die dampfgetriebene Expansionsmaschine, welche als Kolbenmaschine oder als Dampfturbine ausgeführt sein kann, wobei jedoch auch weitere Ausführungsformen denkbar sind, ist in einem Dampfkreislauf angeordnet, der einen Dampferzeuger umfasst. In dem Dampferzeuger wird das Arbeitsmedium des Dampfkreislaufes, beispielsweise Wasser oder ein Wassergemisch, verdampft, so dass es anschließend in der Expansionsmaschine expandieren kann. Der Dampferzeuger weist in der Regel wenigstens einen Wärmetauscher auf, der mit Wärme aus dem Antriebsstrang, insbesondere aus dem Abgasstrom des Verbrennungsmotors beaufschlagt wird und diese Wärme in das Arbeitsmedium des Dampfkreislaufes zur Dampferzeugung überträgt. Alternativ oder zusätzlich kann jedoch auch andere im Antriebsstrang entstehende Wärme zur Dampferzeugung herangezogen werden, beispielsweise jene Wärme, die bei der Verdichtung der Frischluft mittels des Turboladerverdichters entsteht und herkömmlich in einem Ladeluftkühler an die Umgebung abgeführt wird. Weitere mögliche Wärmequellen sind beispielsweise eine Abgasrückführung des Antriebsstranges. Mittels einer solchen Abgasrückführung wird ein Anteil des Abgasstromes des Verbrennungsmotors auf die Frischluftseite des Verbrennungsmotors zurückgeführt und mit der Frischluft, insbesondere der verdichteten Frischluft, gemischt, um hierdurch die Verbrennung im Verbrennungsmotor hinsichtlich der Emissionswerte positiv zu beeinflussen. Herkömmlich sind in einer solchen Abgasrückführung Wärmetauscher angeordnet, die mit dem Kühlwasser des Kühlkreislaufs, mittels welchem der Verbrennungsmotor gekühlt wird, zur Wärmeabfuhr beaufschlagt sind.

Die Triebverbindung zwischen der dampfgetriebenen Expansionsmaschine und der Abgasnutzturbine kann eine rein mechanische Triebverbindung sein oder auch eine teilweise hydrodynamische, indem in dieser Triebverbindung im letzteren Fall eine hydrodynamische Kupplung oder auch Viskokupplung angeordnet ist.

Gemäß einer ersten Ausführungsform ist in der Triebverbindung zwischen der dampfgetriebenen Expansionsmaschine und der Abgasnutzturbine eine Übersetzung vorgesehen, so dass beispielsweise das Turbinenrad der Abgasnutzturbine mit einer höheren Drehzahl umläuft als die Abtriebswelle der dampfgetriebenen Expansionsmaschine. Im letzteren Fall kann die dampfgetriebene Expansionsmaschine beispielsweise besonders leicht als Kolbenmaschine ausgeführt sein.

Insbesondere, wenn die dampfgetriebene Expansionsmaschine als Dampfturbine ausgeführt ist, kann es auch vorteilhaft sein, die Abtriebswelle der dampfgetriebenen Expansionsmaschine koaxial beziehungsweise fluchtend zu der Turbinenradwelle der Abgasnutzturbine anzuordnen oder einteilig mit der Turbinenradwelle auszubilden. Beispielsweise sind das Turbinenrad der Abgasnutzturbine und das Turbinenrad einer als Dampfturbine ausgebildeten Expansionsmaschine auf einer gemeinsamen Welle angeordnet.

Die Erfindung soll nachfolgend anhand von Ausführungsbeispielen und den beigefügten Figuren exemplarisch beschrieben werden.

Es zeigen:
- Figur 1: eine erste Ausführungsform eines erfindungsgemäßen Antriebsstranges mit einer als Kolbenmaschine ausgeführten dampfgetriebenen Expansionsmaschine;
- Figur 2: eine zweite erfindungsgemäße Ausführungsform mit als Dampfturbine ausgeführter dampfgetriebener Expansionsmaschine;
- Figur 3: eine dritte Ausführungsform eines erfindungsgemäßen Antriebsstranges mit einer einzigen Abgasnutzturbine, welche sowohl in einer Triebverbindung mit einem Frischluftverdichter zur Aufladung des Verbrennungsmotors als auch in einer Triebverbindung mit der Kurbelwelle des Verbrennungsmotors steht.

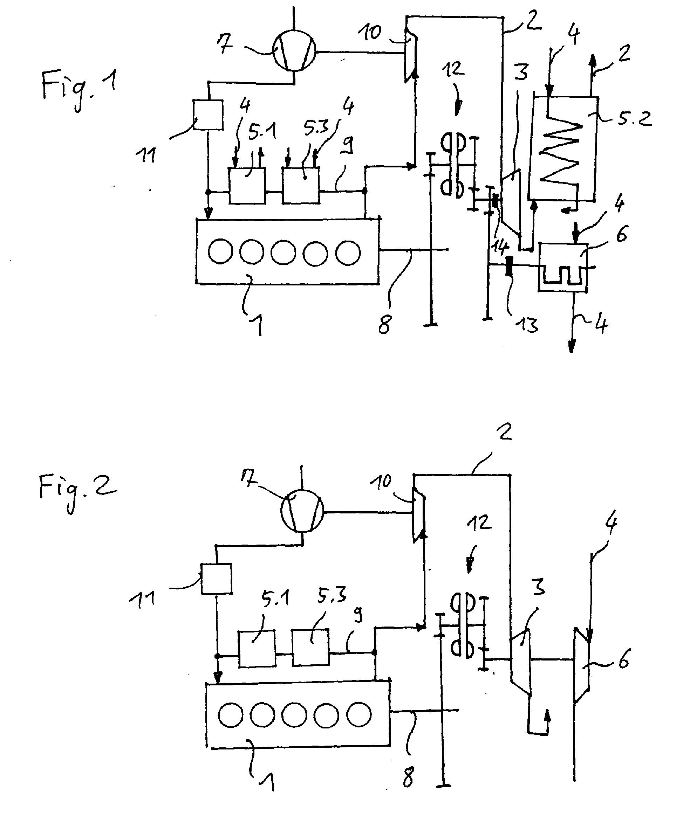

In der Figur 1 erkennt man den Verbrennungsmotor 1, in dessen Abgasstrom 2 in Strömungsrichtung des Abgases gesehen zunächst eine Turboladerturbine 10 und anschließend eine Abgasnutzturbine 3 jeweils mit Abgas beaufschlagt, angeordnet sind. Die Turboladerturbine 10 treibt einen Verdichter 7 an, mittels welchem Frischluft verdichtet und dem Verbrennungsmotor 1 zur Verbrennung zugeleitet wird. Die verdichtete Frischluft wird in einem Wärmetauscher 11 gekühlt, bevor sie mit Abgas aus einer Abgasrückführung 9 gemischt und zusammen mit Kraftstoff dem Verbrennungsmotor 1 zugeführt wird.

Die Abgasnutzturbine 3 steht über eine hydrodynamische Kupplung 12 in einer Triebverbindung mit der Kurbelwelle 8 des Verbrennungsmotors 1 und kann somit Antriebsleistung, die aus der Abgasenergie gewonnen wird, zum Antrieb der Kurbelwelle 8 in diese einspeisen.

Ferner ist eine dampfgetriebene Expansionsmaschine 6, vorliegend in Form einer Kolbenmaschine, vorgesehen, die in einer rein mechanischen Triebverbindung mit der Abgasnutzturbine 3 steht. Die dampfgetriebene Expansionsmaschine 6 ist in einem Dampfkreislauf 4 angeordnet, der nur teilweise dargestellt ist. Zur Dampferzeugung dient ein Dampferzeuger, der einen oder mehrere Wärmetauscher aufweist. Vorliegend sind drei Wärmetauscher zur Dampferzeugung vorgesehen, nämlich ein erster Wärmetauscher 5.1 in der Abgasrückführung 9, ein zweiter Wärmetauscher 5.2 im Abgasstrom 2 in Strömungsrichtung des Abgases hinter der Abgasnutzturbine 3 und ein dritter Wärmetauscher 5.3 wiederum in der Abgasrückführung 9, in Strömungsrichtung des Abgases in der Abgasrückführung 9 vor dem ersten Wärmetauscher 5.1. Das Arbeitsmedium des Dampfkreislaufes 4 strömt, in der Regel, nachdem es aus einer Speisewasserpumpe (nicht dargestellt) ausgetreten ist, zunächst durch den ersten Wärmetauscher 5.1, dann den zweiten Wärmetauscher 5.2 und anschließend den dritten Wärmetauscher 5.3. Anschließend tritt es in die dampfgetriebene Expansionsmaschine 6 ein, wird dort expandiert, bevor es in der Regel anschließend in einen Kondensator (nicht dargestellt) strömen wird und dort kondensiert wird, bevor es wiederum mittels der Speisewasserpumpe in den ersten Wärmetauscher 5.1 gepumpt wird.

Selbstverständlich ist es möglich, eine andere Anzahl von Wärmetauschern zur Dampferzeugung vorzusehen, beispielsweise nur einen oder zwei der dargestellten Wärmetauscher 5.1, 5.2 und 5.3. Zusätzlich oder alternativ könnte auch der Wärmetauscher 11 zur Dampferzeugung herangezogen werden, indem er entsprechend im Dampfkreislauf 4 angeordnet würde.

Um zu verhindern, dass bei einem Antrieb der Kurbelwelle 8 mittels der dampfgetriebenen Expansionsmaschine 6 die Abgasnutzturbine 3 ein Bremsmoment ausübt, weil nicht genug Energie im Abgasstrom 2 enthalten ist, kann in der Triebverbindung zwischen der Abgasnutzturbine 3 und der Stelle der Leistungseinspeisung von der dampfgetriebenen Expansionsmaschine 6 ein Freilauf 14 vorgesehen sein, oder ein Wellenschalter oder anderweitige automatisch oder manuell schaltbare Kupplung, auch eine hydrodynamische Kupplung. Um ferner zu verhindern, dass die dampfgetriebene Expansionsmaschine 6 ein Bremsmoment ausübt, wenn die Kurbelwelle 8 mittels der Abgasnutzturbine 3 angetrieben wird, kann ein entsprechender Freilauf 13 oder dergleichen (Wellenschalter, Kupplung etc.) in der Triebverbindung zwischen dieser Stelle der Leistungsverzweigung und der dampfgetriebenen Expansionsmaschine 6 vorgesehen sein, wie in der Figur 1 angedeutet ist. Selbstverständlich ist die entsprechende Anordnung von einem oder mehreren Freiläufen auch dann möglich, wenn mittels der dampfgetriebenen Expansionsmaschine 6 und der Abgasnutzturbine 3 nicht die Kurbelwelle 8 des Verbrennungsmotors 1, sondern eine andere Welle oder ein anderes Aggregat angetrieben wird.

Die Ausführungsform gemäß der Figur 2 entspricht weitgehend jener der Figur 1, so dass auf die zugehörige Beschreibung verwiesen wird. Es sind jedoch weniger Details dargestellt.

Der entscheidende Unterschied zwischen der Ausführungsform gemäß der Figur 2 und der Ausführungsform gemäß der Figur 1 besteht darin, dass gemäß der Figur 2 die dampfgetriebene Expansionsmaschine 6 als Dampfturbine ausgeführt ist und in einer mechanischen Triebverbindung frei von einer Übersetzung mit der Abgasnutzturbine 3 steht. Gemäß der Figur 1 hingegen ist eine solche mechanische Übersetzung in der Triebverbindung zwischen der dampfgetriebenen Expansionsmaschine 6 und der Abgasnutzturbine 3 vorgesehen, dass die Abgasnutzturbine 3 mit einer schnelleren Drehzahl umläuft, als die dampfgetriebene Expansionsmaschine 6.

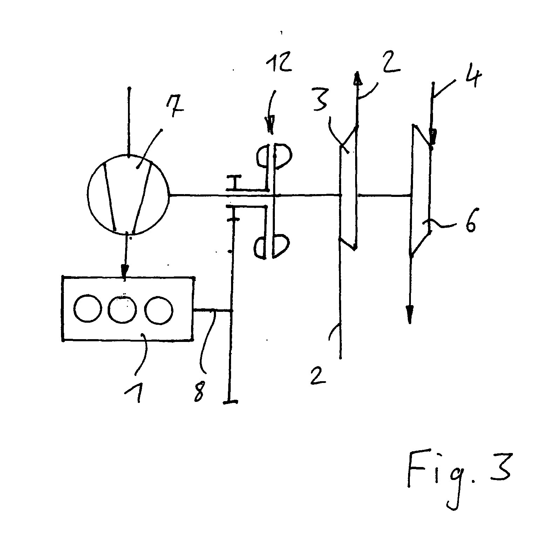

In der Figur 3 ist ein weiteres mögliches Detail dargestellt. Gemäß dieser Ausführungsform kann mittels der Abgasnutzturbine 3 sowohl der Verdichter 7 als auch die Kurbelwelle 8 des Verbrennungsmotors 1 angetrieben werden. Hierzu ist die Abgasnutzturbine 3 mechanisch mit dem Verdichter 7 und dem Pumpenrad einer hydrodynamischen Kupplung 12 verbunden, wobei bei der gezeigten Ausführungsform das Pumpenrad der hydrodynamischen Kupplung 12 mit derselben Drehzahl umläuft wie das Turbinenrad der Abgasnutzturbine 3. Das Turbinenrad der hydrodynamischen Kupplung 12 steht in einer Triebverbindung mit der Kurbelwelle 8 des Verbrennungsmotors 1. Somit ist in der hydrodynamischen Kupplung 12 eine Leistungsverzweigung vorgesehen, über welche Antriebsleistung von der Abgasnutzturbine 3 auf den Verdichter 7 und/oder die Kurbelwelle 8 sowie Antriebsleistung von der Kurbelwelle 8 auf den Verdichter 7 übertragen werden kann.

Die dampfgetriebene Expansionsmaschine 6, vorliegend wiederum in Form einer Dampfturbine, steht erfindungsgemäß wieder in einer mechanischen Triebverbindung mit der Abgasnutzturbine 3, vorliegend in einer direkten mechanischen Triebverbindung frei von einer Übersetzung.

## Patentansprüche

1. Antriebsstrang, insbesondere Fahrzeugantriebsstrang,
1.1 mit einem Verbrennungsmotor (1) zum Einspeisen von Antriebsleistung in den Antriebsstrang, wobei der Verbrennungsmotor (1) einen Abgasstrom (2) erzeugt;
1.2 mit einer Abgasnutzturbine (3), die im Abgasstrom (2) vom Abgas beaufschlagt angeordnet ist, um Abgasenergie in Antriebsleistung umzuwandeln;
1.3 mit einem Dampfkreislauf (4), umfassend einen Dampferzeuger und eine dampfgetriebene Expansionsmaschine (6), mittels welcher Antriebsleistung in den Antriebsstrang einspeisbar ist;
**dadurch gekennzeichnet, dass**
1.4 die dampfgetriebene Expansionsmaschine (6) in einer Triebverbindung mit der Abgasnutzturbine (3) steht, über welche die Abgasnutzturbine (3) und/oder ein von der Abgasnutzturbine angetriebenes Aggregat mittels der dampfgetriebenen Expansionsmaschine (6) antreibbar ist.

2. Antriebsstrang gemäß Anspruch 1, **dadurch gekennzeichnet, dass** die dampfgetriebene Expansionsmaschine (6) in einer mechanischen Triebverbindung mit der Abgasnutzturbine (3) steht.

3. Antriebsstrang gemäß Anspruch 2, **dadurch gekennzeichnet, dass** die dampfgetriebene Expansionsmaschine (6), welche insbesondere als Dampfturbine ausgeführt ist, eine Abtriebswelle aufweist, die koaxial zu einer Turbinenradwelle der Abgasnutzturbine (3) ist, oder die Expansionsmaschine (6) und die Abgasnutzturbine (3) auf einer gemeinsamen Welle angeordnet sind.

4. Antriebsstrang gemäß einem der Ansprüche 1 bis 3, **dadurch gekennzeichnet, dass** die Abgasnutzturbine (3) in einer Triebverbindung mit einem Verdichter (7) steht oder in eine solche schaltbar ist, mittels welchem dem Verbrennungsmotor (1) zur Verbrennung zugeführte Luft verdichtet wird.

5. Antriebsstrang gemäß einem der Ansprüche 1 bis 4, **dadurch gekennzeichnet, dass** die Abgasnutzturbine (3) in einer Triebverbindung mit einer Kurbelwelle (8) oder anderen Abtriebswelle des Verbrennungsmotors (1) steht oder in eine solche schaltbar ist, um die Kurbelwelle (8) oder die andere Abtriebswelle des Verbrennungsmotors anzutreiben.

6. Antriebsstrang gemäß einem der Ansprüche 1 bis 5, **dadurch gekennzeichnet, dass** der Dampferzeuger einen Wärmetauscher (5.2) aufweist, der im Abgasstrom (2) insbesondere in Strömungsrichtung des Abgases hinter der Abgasnutzturbine (3) angeordnet ist und Wärme aus dem Abgas zur Dampferzeugung in das Arbeitsmedium des Dampfkreislaufes (4) überträgt.

7. Antriebsstrang gemäß einem der Ansprüche 1 bis 6, **dadurch gekennzeichnet, dass** der Dampferzeuger einen Wärmetauscher (5.1, 5.3) aufweist, der in einer Abgasrückführung (9) angeordnet ist, welche einen Teil des Abgasstromes (2) auf die Frischluftseite des Verbrennungsmotors (1) leitet und mit dem Verbrennungsmotor (1) zugeführter Frischluft mischt, um Wärme aus dem rückgeführten Abgas zur Dampferzeugung in das Arbeitsmedium des Dampfkreislaufes (4) zu übertragen.

8. Antriebsstrang gemäß einem der Ansprüche 1 bis 3 und insbesondere einem der Ansprüche 5 bis 7, **dadurch gekennzeichnet, dass** der Abgasnutzturbine (3) im Abgasstrom (2) eine Turboladerturbine (10) vorgeschaltet ist, die in einer Triebverbindung mit einem Verdichter (7) steht oder in eine solche schaltbar ist, mittels welchem dem Verbrennungsmotor (1) zur Verbrennung zugeführte Luft verdichtet wird.
